# EUROPEAN PATENT SPECIFICATION

(11) **EP 2 240 046 B1**
(45) Date of publication and mention of the grant of the patent: **13.06.2012**
(21) Application number: 09707535.2
(22) Date of filing: 14.01.2009
(51) Int. Cl.: A45F 3/14, A01D 34/90

(54) **SUPPORTING DEVICE FOR PORTABLE AGRICULTURAL MACHINERY, PARTICULARLY FOR BLOWERS, TREE SHAKERS AND SIMILAR MACHINERY**
STÜTZVORRICHTUNG FÜR TRAGBARE LANDWIRTSCHAFTSMASCHINEN, BESONDERS FÜR BLAS- UND BAUMSCHÜTTELVORRICHTUNGEN UND ÄHNLICHE MASCHINEN
DISPOSITIF DE SUPPORT POUR MACHINES AGRICOLES PORTABLES, EN PARTICULIER POUR SOUFFLANTES, DISPOSITIFS POUR SECOUER DES ARBRES ET MACHINES SIMILAIRES

(30) Priority: 07.02.2008 IT MI20080189
(43) Date of publication of application: 20.10.2010
(73) Proprietor: Cifarelli S.p.A., 27058 Voghera (Pavia) (IT)
(72) Inventor: CIFARELLI, Roberto, I-27058 Voghera (Pavia) (IT)
(74) Representative: Tarabbia, Luigi
(86) International application number: PCT/IB2009/050131
(87) International publication number: WO 2009/098602

(56) References cited:
- WO-A-2004/084672
- GB-A- 2 409 831
- US-A1- 2007 205 237

## Description

The present invention relates to a supporting device for portable agricultural machinery, such as blowers, tree shakers and similar machinery.

It is known that handling of portable powered machinery, or power tools, in the agricultural field (and also in other fields, such as cleaning of urban areas, for example) can involve that an operator, generally on foot, should put power tools of rather important weight and bulkiness on his/her shoulder.

In order to properly bear the weight of this powered machinery, and with the simultaneous purpose of being able to operate it in a sufficiently accurate manner, generally a shoulder sling is provided that discharges most of the weight of the machinery on one shoulder of the operator, which in turn grasps the machinery through suitable grip means so as to be able to direct and/or operate it.

While the above mentioned known art is widely employed, it has an important drawback in terms of operability of the portable machinery, because generally the shoulder slings of known type (that consist of suitable strap or belt elements connected to two points of the machinery and a cushion linked to these straps or belts and designed to rest on the operator's shoulder) offer a satisfactory degree of comfort only when the portable machinery is carried with a given orientation relative to the operator's body.

It is known from US 2007205237 a carrying arrangement for a hand-guided power tool. which has a carrying element to be guided across a shoulder of an operator and a shoulder support arranged slidably in a longitudinal direction on the carrying element.

Such an arrangement has also a friction-reducing element for reducing friction between the carrying element and the shoulder, and the shoulder support has a shoulder section and a lateral support section connected to the shoulder section; anyhow, this prior art reference only relies in all the load/weight discharge onto a single shoulder of an operator.

It is also known from WO 2004084672 a harness for a combustion engine powered tool that is carried on the back of the operator. This harness comprises at least one strap extending around the shoulder of the operator and a waist belt, and the strap has an upper section secured to the tool and a belt connected to the upper section itself.

The just cited belt is extending downwards and passes through a loop secured in the tool, so that when the belt is released from its connection to the upper padded section, it slides through and out of the loop: in this manner, the strap around the shoulder of the operator is opened and one side of the waist belt can be released from the tool.

However, in this known device the (adjustable) strap is running exclusively on a single side of the harness, and there is no "passing through" of the strap itself onto the other operator's shoulder: otherwise stated, the strap which is attachable to the tool does not have an "extension in continuity" which goes through and over the operator's shoulder that's not directly loaded with the tool's weight.

Should the operator be in a need to rotate the portable machinery upwards or downwards, the cushion linked to the strap or belt would tend to move integrally with the machinery itself, and this gives rise to an important friction exactly on the operator who at the same time is bereft of the padding/cushion protection; therefore, this will bring about an important resistance to movement of the portable machinery and to worsening of the operator's work conditions.

The above mentioned drawbacks become worse when portable machinery such as tree shakers or blowers are concerned; these tools in fact are able to generate important amounts of vibrations that, if not filtered by the cushion, are transmitted to the operator together with the connected discomforts.

Accordingly, the present invention aims at conceiving a supporting device for portable agricultural machinery capable of obviating the above mentioned limits. Mainly, the present invention aims at conceiving a supporting device enabling the agricultural machinery hooked thereto to be operated in a wide variety of angular movements (and around different axes), while at the same time always keeping a correct level of comfort for the operator.

At the same time the present invention also aims at conceiving a supporting device suitable to absorb the oscillations/vibrations generated by some types of portable agricultural tools (such as tree shakers or blowers) without transmitting said oscillations/vibrations to the operator.

It is therefore an aim of the present invention to conceive a supporting device of low production costs, that can fit a very wide variety of portable agricultural machinery and has great ergonomic qualities.

The technical task mentioned and the aim specified are substantially achieved by a supporting device for portable agricultural machinery having the features set out in one or more of the appended claims.

It is now described, by way of non-limiting example, a preferred but not exclusive embodiment of a supporting device according to the invention, illustrated in the accompanying drawings, in which:

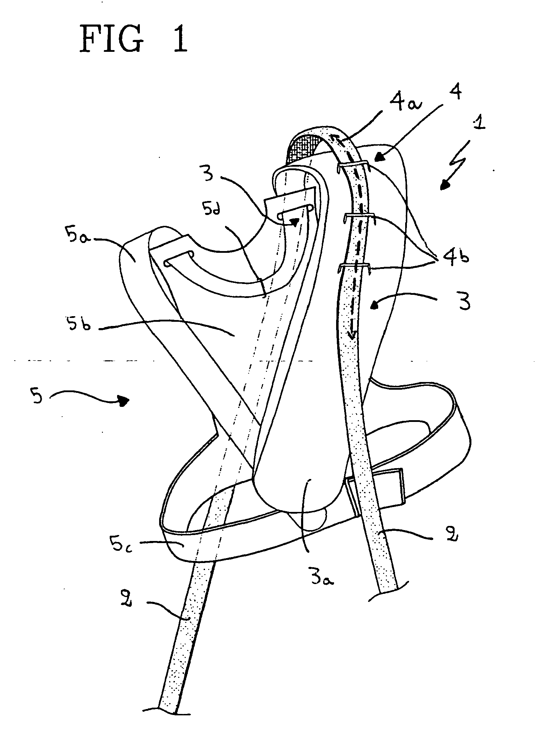

- Fig. 1 is a diagrammatic perspective view of a first embodiment of the invention; and
- Fig. 2 is a diagrammatic perspective view of a second embodiment of the invention.

With reference to the drawings, the supporting device according to the present invention has been identified by reference numeral 1 and it essentially comprises a main support element 2 connectable to a machinery or tool (denoted at A in the figures and consisting of a tree shaker or any other tool or machinery, for example) and an interface element 3 connected to the main support element 2; this interface element 3 is adapted.to be interposed between a main rest area of an operator's body and the main support element 2 under operating condition.

Advantageously, in order to enable relative movement between the tool and the operator (but in such a manner as to keep the interface element always in its correct position), connecting means 4 is present that is active between the interface element 3 and the main support element 2 and is suitable to allow relative sliding between these two pieces of the device.

In other words, the present invention has such a structure that the main support element 2 can slide relative to the interface element, which on the contrary keeps substantially steady or fixed relative to the operator's body; in this way, it is possible to move the tool (and therefore to change the spatial position of the main support element 2) without however moving the interface element 3.

From an operating point of view, the connecting means 4 defines a movement direction 4a (described more precisely in the followiwg) along which the main support element 2 slides, so that relative sliding actions between the main support element 2 and the interface element generate variations in the spatial orientation of the tool.

From a structural point of view, it is possible to see that, depending on current requirements, the support element 2 can be shaped like a strap, a belt, a chain or a cable; in order to conveniently support the tool, the main support element 2 is connected (by means of suitable mechanical constraints) to the tool by at least one of its ends (more preferably both of them).

In order to dampen the vibrations generated by the agricultural tool, the support element 2 can conveniently have elastic suspension means at its ends, which means can be connected to the tool; this elastic suspension means can be of any nature (springs of different shapes and/or strength, blocks of rubber material, and so on), depending on current requirements.

As to the interface element 3, it has at least some protection padding 3a adapted to be interposed between the above mentioned main rest area of the operator's body and the main support element 2; to ensure the best ergonomic quality and the widest possibility of movement and/or orientation of the tool, this main rest area of the operator's body is preferably an anatomic region located close to one shoulder.

For the purpose of enabling relative movement between the main support element 2 and the interface element 3, the connecting means 4 comprises at least one passage loop 4b defining an insertion aperture into which the main support element 2 is introduced; with reference to the accompanying drawings, it is possible to see that the connecting means 4 comprises a plurality of passage loops 4b aligned along the previously mentioned movement direction 4a; in this case, the movement direction 4a can conveniently be defined by a substantially curvilinear trajectory (or at all events an equivalent trajectory, such as a succession of straight segments or others) around the main rest area.

For further improving the mechanical and ergonomic performance of the present device, auxiliary support elements 5 can be provided which co-operate with the main support element 2 for discharging the tool weight bearing on the operator and adapted to be interposed between auxiliary rest areas of the operator's body and the main support element 2 under operating conditions. In other words, the auxiliary support elements 5 in any case support the tool weight and/or bulkiness (although in an "indirect" manner, i.e. not by a direct connection with the tool that is hanging from the present device by direct hooking to the main support element 2) and discharge the static and dynamic mechanical actions of the tool onto other areas of the operator's body.

To the aims of the present invention, said other rest areas can comprise an anatomic region located close to the operator's shoulder that is not engaged by the interface element 3 and/or the operator's trunk area and/or the abdomen area and/or the back area.

In order to achieve this anatomic interfacing, the auxiliary support elements 5 comprise:
- an auxiliary shoulder strap 5a that can be interfaced with the shoulder that is not engaged by the interface element 3;
- a connecting and supporting structure 5b to be positioned close to the operator's dorsal region and connected to the interface element 3 and the auxiliary shoulder strap 5a; and
- a belt 5c (provided with suitable opening and closing means) connected to the connecting and supporting structure 5b and suitable to be positioned around the operator's abdomen and/or pelvis.

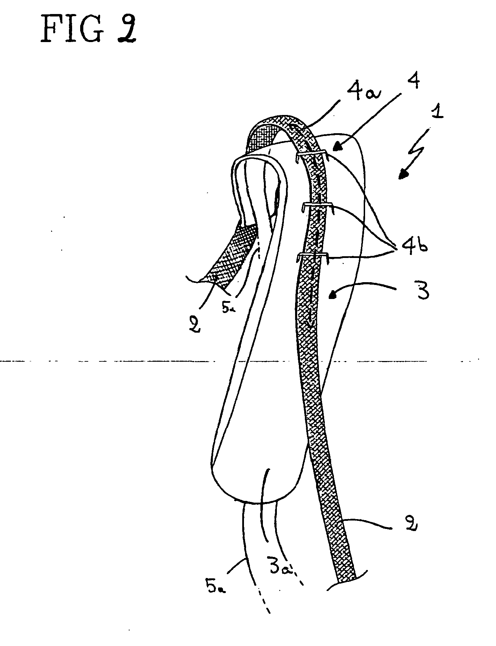

It is to be noted that in the just described solution (illustrated in Fig. 2) the auxiliary shoulder strap 5a can in turn have one or more paddings; in this case, in the region where the auxiliary shoulder strap 5a is connected to the interface element 3 (that is the operator's body region bearing most of the tool's weight) an important increase in the cushioning power is achieved, due to the synergetic action of the two co-operating paddings.

Still for the purpose of optimising distribution of the loads resulting from the tool, means can be advantageously present for distributing said loads resulting from the tool onto both shoulders of the operator; this distributing means substantially comprises an extension in the continuity of the auxiliary strap 5a, which in turn passes through an engagement seat 5d formed in the connecting and supporting structure 5b (and at the same time connected to the main interface element 3).

The just mentioned extension in the continuity of the auxiliary strap 5a is free to slide relative to the connecting and supporting structure 5b through the engagement seat 5d, so that the efforts transmitted to the interface element 3 can be transmitted through this extension and be therefore discharged through the auxiliary strap 5a, onto the other shoulder.

It is also an object of the present invention one or more agricultural tools (that as previously seen can advantageously consist of blowers or tree shakers, but more generally of any type of portable, powered or not, machinery) comprising at least one supporting device according to that which has been hitherto described and hereinafter claimed.

The invention achieves important advantages.

In fact, due to the particular building architecture of the supporting device it is possible to handle and move any agricultural tool, even of important weight and/or sizes, within a wide range of possible orientations, without causing unwanted displacements of the protection padding from the rest area on the operator's body; as a result, an important improvement in the quality of the operator's work is achieved and consequently an overall increase in yield.

In addition, it is possible to see that the alternative embodiments of the invention allow an important improvement in the operator's work conditions also when tools such as tree shakers and/or blowers are to be handled; in fact, in this case the device of the invention simultaneously ensures a high degree of isolation from vibrations and the possibility of moving the tool always in the optimal weight-supporting conditions.

In addition, due to the availability of the accessory elements for the present supporting device, particularly high weights can be discharged on a wider area of the operator's body, to the operator's advantage in terms of better efficiency and physical health.

It should be finally recognised that the present invention allows low manufacturing costs for the tool and also does not involve particular complications or modifications and adaptations to be carried out on portable agricultural machinery of known type, which is advantageous in terms of application flexibility, overall production economy and final price of the product.

## Claims

1. A supporting device for portable agricultural machinery, comprising:
- a main support element (2) suitable to be connected to a machinery or tool;
- an interface element (3) connected to said main support element (2) and adapted to be interposed between a main rest area of an operator's body and the main support element (2) under operating conditions; and
- connecting means (4) active between said interface element (3) and the main support element (2) and suitable to enable relative sliding between them, **characterised in that** it further comprises:
- auxiliary support elements (5) adapted to be interposed between auxiliary rest areas of an operator's body and the main support element (2) under operating conditions, said auxiliary rest areas comprising an anatomic region located close to the shoulder that is not engaged by the interface element (3) and/or the operator's trunk area and/or the abdomen area and/or the back area, said auxiliary support elements (5) comprising:
- an auxiliary strap (5a) to be interfaced with the shoulder that is not engaged by the interface element (3);
- a connecting and supporting structure (5b) to be positioned close to a dorsal region of an operator and connected to the interface element (3) and the auxiliary strap (5a); and
- a belt (5c) connected to said connecting and supporting structure (5b) and adapted to be positioned around an operator's abdomen and/or pelvis, and
- means for distributing a load resulting from the tool onto at least both shoulders of the operator, said distributing means comprising an extension in the continuity of the auxiliary strap (5a) passing through an engagement seat (5d) formed in the connecting and supporting structure (5b) and connected to the interface element (3), said extension in the continuity of the auxiliary strap (5a) being free to slide relative to the connecting and supporting structure (5b) through said engagement seat (5d).

2. A device as claimed in claim 1, wherein said connecting means (4) defines a movement direction (4a) along which the main support element (2) slides, relative sliding movements between the main support element (2) and the interface element (3) generating variations in a spatial orientation of the tool.

3. A device as claimed in claim 1 or 2, wherein the main support element (2) is in the form of a strap, a belt, a chain or a cable, said main support element (2) being connected, by at least one and/or two ends, to said tool and comprising elastic suspension means to be connected to the tool.

4. A device as claimed in anyone of the preceding claims, wherein the interface element (3) has at least one protection padding (3a) adapted to be interposed between said main rest area of the operator's body and the main support element (2), said main rest area of the operator's body being an anatomic region located close to one shoulder.

5. A device as claimed in anyone of the preceding claims, wherein the connecting means (4) comprises at least one passage loop (4b) defining an insertion aperture into which the main support element (2) is introduced.

6. A device as claimed in claim 5, wherein the connecting means (4) comprises a plurality of passage loops (4b) aligned along said movement direction (4a), the movement direction (4b) being defined by a curvilinear trajectory around the main rest area.

7. An agricultural machinery or tool, preferably a blower or a tree shaker, comprising a supporting device as claimed in anyone of the preceding claims.

## Patentansprüche

1. Stützvorrichtung für tragbare Landwirtschaftsmaschinen, umfassend:
- ein Hauptstützelement (2), dazu geeignet, mit einer Maschine oder einem Werkzeug verbunden zu werden;
- ein Anschlusselement (3), verbunden mit dem Hauptstützelement (3) und dazu bestimmt, um zwischen einem Hauptauflagebereich eines Körpers eines Bedieners und dem Hauptstützelement (2) unter Betriebsbedingungen eingefügt zu werden; und
- Verbindungsmittel (4), die zwischen dem Anschlusselement (3) und dem Hauptstützelement (2) wirken und dazu geeignet sind, das entsprechende Gleiten zwischen diesen zu ermöglichen, **dadurch gekennzeichnet, dass** sie zudem umfasst:
- Hilfsstützelemente (5), dazu bestimmt, zwischen Hilfsauflagebereichen eines Körpers eines Bedieners und dem Hauptstützelement (2) unter Betriebsbedingungen eingefügt zu werden, wobei die Hilfsauflagebereiche eine anatomische Region umfassen, die in der Nähe der Schulter angeordnet ist, die nicht vom Anschlusselement (3) und/oder vom Rumpfbereich und/oder dem Unterleibsbereich und/oder dem Rückenbereich belegt wird, wobei die Hilfsstützelemente (5) umfassen:
- einen Hilfsgurt (5a), der an die Schulter angeschlossen werden muss, die nicht vom Anschlusselement (3) belegt wird;
- eine Verbindungs- und Stützkonstruktion (5b), die in der Nähe eines Rückenbereichs eines Bedieners zu positionieren ist und mit dem Anschlusselement (3) und dem Hilfsgurt (5a) verbunden wird; und
- ein Band (5c), verbunden mit der Verbindungs- und Stützkonstruktion (5b) und dazu bestimmt, rund um einen Unterleib und/oder das Becken eines Bedieners positioniert zu werden, und Mittel zum Verteilen einer aus dem Werkzeug resultierender Last auf mindestens beide Schultern des Bedieners, wobei diese Verteilungsmittel eine Verlängerung in Weiterführung des Hilfsgurts (5a) umfassen, die durch einen Eingriffsitz (5d) geführt wird, geformt in der Verbindungs- und Hilfskonstruktion (5b) und verbunden mit dem Anschlusselement (3), wobei diese Verlängerung in Weiterführung des Hilfsgurts (5a) frei relativ zur Verbindungs- und Stützkonstruktion (5b) durch den Eingriffsitz (5d) gleiten kann.

2. Vorrichtung nach Anspruch 1, **dadurch gekennzeichnet, dass** die Verbindungsmittel (4) eine Bewegungsrichtung (4a) definieren, entlang derer das Hauptstützelement (2) gleitet, wobei die entsprechenden Gleitbewegungen zwischen dem Hauptstützelement (2) und dem Anschlusselement (3) Variationen in einer räumlichen Ausrichtung des Werkzeugs erzeugen.

3. Vorrichtung nach Anspruch 1 oder 2, **dadurch gekennzeichnet, dass** das Hauptstützelement (2) die Form eines Gurts, eines Bands, einer Kette oder eines Kabels aufweist, wobei das Hauptstützelement (2) mit wenigstens einem und/oder zwei Enden mit dem Werkzeug verbunden ist und elastische Federungsmittel umfasst, die mit dem Werkzeug zu verbinden sind.

4. Vorrichtung nach einem der vorhergehenden Ansprüche, **dadurch gekennzeichnet, dass** das Anschlusselement (3) wenigstens eine Schutzpolsterung (3a) aufweist, dazu bestimmt, zwischen den Hauptauflagebereich des Körpers des Bedieners und das Hauptstützelement (2) eingeführt zu werden, wobei es sich beim Hauptauflagebereich des Körpers des Bedieners um eine anatomische Region handelt, die in der Nähe einer Schulter angeordnet ist.

5. Vorrichtung nach einem der vorhergehenden Ansprüche, **dadurch gekennzeichnet, dass** die Verbindungsmittel (4) wenigstens eine Durchgangsschleife (4b) umfassen, die eine Einsatzöffnung definiert, in die das Hauptstützelement (2) eingeführt wird.

6. Vorrichtung nach Anspruch 5, **dadurch gekennzeichnet, dass** die Verbindungsmittel (4) eine Mehrzahl von Durchgangsschleifen (4b) umfassen, die entlang der Bewegungsrichtung (4a) ausgerichtet sind, wobei die Bewegungsrichtung (4b) durch eine kurvenförmige Bewegungsbahn rund um den Hauptauflagebereich definiert ist.

7. Landwirtschaftsmaschine oder Werkzeug, vorzugsweise eine Blas- oder Baumschüttelvorrichtung, umfassend eine Stützvorrichtung nach einem der vorhergehenden Ansprüche.

## Revendications

1. Dispositif de support pour machines agricoles portables, comprenant :
- un élément de support principal (2) adapté pour être connecté à une machine ou à un outil ;
- un élément de liaison (3) relié au dit élément de support principal (2) et adapté pour être interposé entre une zone d'appui principale du corps d'un opérateur et l'élément de support principal (2) en conditions de fonctionnement ; et
- des moyens de raccordement (4) agissant entre ledit élément de liaison (3) et l'élément de support principal (2) et aptes à activer le coulissement correspondant entre eux, **caractérisé en ce qu'**il comprend de plus :
- des éléments de support auxiliaires (5) adaptés à être interposés entre des zones d'appui auxiliaires du corps d'un opérateur et l'élément de support principal (2) en conditions de fonctionnement, lesdites zones d'appui auxiliaires comprenant une région anatomique située près de l'épaule qui n'est pas concernée par l'élément de liaison (3) et/ou par la zone du tronc de l'opérateur et/ou la zone de l'abdomen et/ou la zone du dos, lesdits éléments de support auxiliaires (5) comprenant :
- une sangle auxiliaire (5a) devant être reliée à l'épaule qui n'est pas concernée par l'élément de liaison (3) ;
- une structure de support et de raccordement (5b) devant être positionnée près de la zone dorsale d'un opérateur et reliée à l'élément de liaison (3) et à la sangle auxiliaire (5a) ; et
- une ceinture (5c) reliée à ladite structure de support et de raccordement (5b) et adaptée pour être positionnée autour de l'abdomen et/ou du bassin de l'opérateur, et des moyens pour la répartition d'une charge, résultant de l'outil, sur au moins les deux épaules de l'opérateur, lesdits moyens de répartition comprenant un développement dans la continuité de la sangle auxiliaire (5a) passant à travers un siège d'engagement (5d) formé dans la structure de support et de raccordement (5b) et relié à l'élément de liaison (3), ledit développement dans la continuité de la sangle auxiliaire (5a) étant libre de coulisser par rapport à la structure de support et de raccordement (5b) à travers ledit siège d'engagement (5d).

2. Dispositif selon la revendication 1, dans lequel les moyens de raccordement (4) définissent un sens de mouvement (4a) le long duquel l'élément de support principal (2) coulisse, les mouvements coulissants correspondants entre l'élément de support principal (2) et l'élément de liaison (3) générant des variations lors de l'orientation de l'outil dans l'espace.

3. Dispositif selon les revendications 1 ou 2, dans lequel l'élément de support principal (2) a la forme d'une sangle, d'une ceinture, d'une chaîne ou d'un câble, ledit élément de support principal (2) étant relié par au moins un et/ou deux extrémités au dit outil et comprenant des moyens de suspension élastiques à relier à l'outil.

4. Dispositif selon l'une quelconque des revendications précédentes, dans lequel l'élément de liaison (3) comporte au moins un rembourrage de protection (3a) adapté pour être interposé entre ladite zone d'appui principale du corps de l'opérateur et l'élément de support principal (2), ladite zone d'appui principale du corps de l'opérateur étant une région anatomique située près d'une épaule.

5. Dispositif selon l'une quelconque des revendications précédentes, dans lequel les moyens de raccordement (4) comprennent au moins une boucle de passage (4b) définissant une ouverture d'insertion dans laquelle l'élément de support principal (2) est introduit.

6. Dispositif selon la revendication 5, dans lequel les moyens de raccordement (4) comprennent une pluralité de boucles de passage (4b) alignées le long dudit sens de mouvement (4a), le sens de mouvement (4b) étant défini par une trajectoire curviligne autour de la zone d'appui principale.

7. Machine ou outil agricole, de préférence une soufflante ou un dispositif pour secouer des arbres, comprenant un dispositif de support selon l'une quelconque des revendications précédentes.
